# EUROPEAN PATENT SPECIFICATION

(11) **EP 3 889 722 B1**
(45) Date of publication and mention of the grant of the patent: **03.07.2024**
(21) Application number: 19904248.2
(22) Date of filing: 27.12.2019
(51) Int. Cl.: G01C 21/34, B60W 30/18, B60W 60/00, B60W 30/09, B60W 30/12

(54) **GENERATION METHOD AND GENERATION SYSTEM FOR DYNAMIC TARGET LINE DURING AUTOMATIC DRIVING OF VEHICLE, AND VEHICLE**
ERZEUGUNGSVERFAHREN UND ERZEUGUNGSSYSTEM FÜR DYNAMISCHE ZIELLINIE WÄHREND DES AUTOMATISCHEN FAHRENS EINES FAHRZEUGS UND FAHRZEUG
PROCÉDÉ DE GÉNÉRATION ET SYSTÈME DE GÉNÉRATION D'UNE LIGNE CIBLE DYNAMIQUE PENDANT LA CONDUITE AUTOMATIQUE D'UN VÉHICULE, ET VÉHICULE

(30) Priority: 29.12.2018 CN 201811643956; 29.12.2018 CN 201811640988
(43) Date of publication of application: 06.10.2021
(73) Proprietor: Great Wall Motor Company Limited, Hebei 071000 (CN)
(72) Inventor: CHANG, Shiwei, Baoding, Hebei 071000 (CN); ZHANG, Kai, Baoding, Hebei 071000 (CN); GE, Jianyong, Baoding, Hebei 071000 (CN); ZHEN, Longbao, Baoding, Hebei 071000 (CN); HE, Lin, Baoding, Hebei 071000 (CN); WANG, Tianpei, Baoding, Hebei 071000 (CN); JIA, Zhuo, Baoding, Hebei 071000 (CN); LIU, Hongliang, Baoding, Hebei 071000 (CN); ZHANG, Jian, Baoding, Hebei 071000 (CN)
(74) Representative: dompatent von Kreisler Selting Werner - Partnerschaft von Patent- und Rechtsanwälten mbB
(86) International application number: PCT/CN2019/129386
(87) International publication number: WO 2020/135772

(56) References cited:
- US-A1- 2016 306 361
- US-A1- 2016 339 959
- US-A1- 2017 101 097
- US-A1- 2017 236 422

## Description

### FIELD

The present invention relates to the technical field of vehicle automatic driving, and in particular to a method and a system for generating a dynamic target line in a vehicle automatic driving process, and a vehicle.

### BACKGROUND

Vehicle driverless technology refers to sensing a road environment through a vehicle-mounted sensing system, automatically planning a driving route, and controlling the vehicle to drive. The dynamic target line is an optimal path, which is planned in real time for lane changing and obstacle avoidance according to the environment state of the vehicle driving process. In the field of vehicle autonomous driving, there is a lack of a method that can generate optimal dynamic target lines for different environments such that the vehicle is controlled to drive according to the generated dynamic target line when the vehicle is automatically driven.

US2016/0339959 A1 discloses a driver assistance apparatus including at least one camera configurated to generate images of a view in front of a vehicle and a processor. The processor is configurated to detect an object present in a traveling lane of the vehicle based on the generated images and provide a steering apparatus of the vehicle with a control signal to adjust a direction of travel of the vehicle within the traveling lane based on information regarding the object.

### SUMMARY

In view of the above, a first object of the present invention is to provide a method for generating a dynamic target line in a vehicle automatic driving process. The method can generate optimal dynamic target lines for different environments, so as to control the vehicle to travel according to the generated target line when the vehicle is automatically driven.

To achieve the above object, the technical solutions of the present invention are claimed in claim 1 and 9.

A method for generating a dynamic target line in a vehicle automatic driving process includes: acquiring obstacle information in all lanes within a first preset range around a vehicle; generating a first dynamic target line of a current travel lane of the vehicle according to a curvature and a width of the current travel lane of the vehicle, in a case of no obstacle in front of the current travel lane of the vehicle within the first preset range around the vehicle; acquiring a safe driving width of the current travel lane of the vehicle, in a case that an obstacle is located in front of the current travel lane of the vehicle within the first preset range around the vehicle; and generating a second dynamic target line of the current travel lane according to the safe driving width, in a case that the safe driving width of the current travel lane of the vehicle is greater than a preset safe passage width.

After the obtaining the safe driving width of the current travel lane, the method further includes: in a case that the safe driving width of the current travel lane of the vehicle is less than the preset safe passage width, determining whether an obstacle is located in an adjacent lane within the first preset range around the vehicle; and generating a first dynamic target line of the adjacent lane in a case of no obstacle in the adjacent lane within the first preset range around the vehicle.

After determining whether an obstacle exists in an adjacent lane within the first preset range around the vehicle, the method further includes: in a case that an obstacle is located in the adjacent lane within a second preset range around the vehicle, controlling the vehicle to decelerate; wherein the second preset range is smaller than the first preset range.

The method further includes: acquiring a safe driving width of the adjacent lane, in a case that no obstacle is located in the adjacent lane within a second preset range around the vehicle and an obstacle is located in front of the vehicle in the adjacent lane within the first preset range around the vehicle; generating a second dynamic target line of the adjacent lane according to the safe driving width of the adjacent lane, in a case that the safe driving width of the adjacent lane is greater than the preset safe passage width; and controlling the vehicle to decelerate, in a case that the safe driving width of the adjacent lane is less than the preset safe passage width.

In a possible implementation, the method further includes: when the vehicle travels along the first dynamic target line of the adjacent lane or the second dynamic target line of the adjacent lane, in a case that no obstacle is located at an initial travel lane within the first preset range around the vehicle and no obstacle is located at a side and a rear of the vehicle within the second preset range around the vehicle, generating a dynamic target line after the vehicle returns to the initial travel lane.

In a possible implementation, the method further includes providing an electronic map of a preset range around the vehicle when the vehicle travels along the first dynamic target line of the adjacent lane or a second dynamic target line of the adjacent lane, wherein the electronic map includes lane lines of all lanes at an entrance of a ramp and vehicle information for all vehicles at the entrance of the ramp; determining whether the vehicle satisfies a preset condition for an entrance ramp; in a case that the preset condition for the entrance ramp is not met, acquiring a transverse closest distance between the vehicle and each vehicle in the ramp according to a curvature of a lane line; generating a first lane line parallel to the curvature of the lane line according to the transverse closest distance; acquiring a transverse position closest point between the vehicle and a front vehicle in a current lane; and generating a safe driving region according to the first lane line, a current position of the vehicle and the transverse position closest point between the vehicle and the front vehicle; and generating a safety offset line according to the safe driving region.

In a possible implementation, the generating a safe driving region according to the first lane line, a current position of the vehicle and the transverse position closest point between the vehicle and the front vehicle includes: generating a second lane line by translating the first lane line for a preset distance along a direction of passing through the transverse position closest point between the vehicle and the front vehicle; generating a third lane line which passes through the transverse position closest point between the vehicle and the front vehicle and is perpendicular to the first lane line; generating a fourth lane line which passes through the current position of the vehicle and is perpendicular to the curvature of the lane line; and generating the safe driving region according to the first lane line, the second lane line, the third lane line, and the fourth lane line.

In a possible implementation, the generating a safety offset line according to the safe driving region further includes: generating the safety offset line according to the first lane line, the second lane line, the third lane line and the fourth lane line, wherein a curvature of the safety offset line is equal to the curvature of the lane line, a distance between the safety offset line and the first lane line is equal to a distance between the safety offset line and the second lane line, and the safety offset line intersects the third lane line and the fourth lane line, respectively.

In a possible implementation, the preset condition for the entrance ramp includes: no vehicle at a lateral position of the vehicle in the ramp; a predicted collision time of the vehicle and the front vehicle being greater than a first preset time and a distance between the vehicle and the front vehicle being greater than a first preset distance; and a predicted collision time of the vehicle and a rear vehicle being greater than a second preset time and a distance between the vehicle and the rear vehicle being greater than a second preset distance.

In a possible implementation, the providing an electronic map of a preset range around the vehicle includes: acquiring position information of the vehicle; a position, a speed and a size of the target object within the preset range around the vehicle; and information on a lane position and a lane width within the preset range around the vehicle; and generating the electronic map according to the position information of the vehicle, the position, the speed and the size of a vehicle within the preset range around the vehicle, and the information on the lane position and the lane width within the preset range around the vehicle.

In a possible implementation, the method further includes: generating a third dynamic target line of the current travel lane of the vehicle according to a position and a shape of an obstacle, and the curvature and the width of the current travel lane of the vehicle, in a case that within the first preset range around the vehicle, the obstacle is located at a side of the vehicle, and at least a part of the obstacle is located in the current travel lane of the vehicle.

In a possible implementation, after the acquiring obstacle information in all lanes within a first preset range around the vehicle, the method further includes: acquiring the current position of the vehicle; acquiring road environment information within the first preset range around the vehicle according to the current position of the vehicle; generating a curvature and a width of each lane of a current travel section according to the current position of the vehicle and the road environment information within the first preset range around the vehicle; and generating a fitting lane line of all lanes according to the curvature and the width of each lane of the current travel section.

Compared with the conventional technology, the method for generating the dynamic target line in the vehicle automatic driving process according to the invention has the following advantages.

In the method for generating the dynamic target line in the vehicle automatic driving process according to the invention, whether the vehicle can safely pass through the current travel lane is determined according to the obstacle information and the vehicle information in all lanes within the preset range in front of the vehicle. If the vehicle can safely pass through the current travel lane, the dynamic target line of the current travel lane is output so that the vehicle can travel according to the dynamic target line of the current travel lane. If the vehicle cannot safely pass through the current travel lane, whether the vehicle can safely pass through an adjacent lane is determined. If the vehicle can safely pass through the adjacent lane, a dynamic target line of the adjacent lane is generated, so that the vehicle travels according to the dynamic target line of the adjacent lane. If the vehicle cannot safely pass through the current travel lane and the adjacent lane, the vehicle is controlled to decelerate. When the vehicle changes the lane, if the initial lane meets the driving requirement and the distance between the vehicle and the rear vehicle in the initial lane is greater than the safe distance, the vehicle is controlled to drive back to the initial lane and generate the dynamic target line of the initial lane. The front vehicle driving in the preset range in the present embodiment can be regarded as a fixed obstacle at a certain moment. When the position of the front vehicle within the preset range changes, the generated dynamic target line is updated in real time, so as to ensure that the vehicle can travel according to the current dynamic target line when the vehicle is automatically driven.

Another object of the present invention is to provide a system for generating a dynamic target line in a vehicle automatic driving process. The system can generate optimal dynamic target lines for different environments, so as to control the vehicle to travel according to the generated target line when the vehicle is automatically driven.

To achieve the above object, technical solutions of the present invention are implemented as follows.

A system for generating a dynamic target line in a vehicle automatic driving process includes an information acquisition module configured to acquire obstacle information in all lanes within a preset range around a vehicle; a lane line generation module configured to generate a dynamic lane line; a control module configured to control the lane line generation module to generate a first dynamic target line of a current travel lane of the vehicle according to a curvature and a width of the current travel lane of the vehicle, in a case of no obstacle in front of the current travel lane of the vehicle within a first preset range around the vehicle; to acquire a safe driving width of the current travel lane of the vehicle according to the obstacle information in front of the current travel lane of the vehicle, in a case that the obstacle is located in front of the current travel lane of the vehicle within the first preset range around the vehicle; and to control the lane line generation module to generate a second dynamic target line of the current travel lane according to the safe driving width of the current travel lane, in a case that the safe driving width of the current travel lane of the vehicle is greater than a preset safe passage width.

The control module is further configured to control the lane line generation module to generate a first dynamic target line of an adjacent lane, in a case that an obstacle is located in front of the current travel lane of the vehicle, the safe driving width of the current travel lane of the vehicle is less than the preset safe passage width and no obstacle is located in the adjacent lane, within a first preset range around the vehicle.

The control module is further configured to control the vehicle to decelerate, in a case that an obstacle is located in front of the current travel lane of the vehicle within the first preset range around the vehicle and the safe driving width of the current travel lane of the vehicle is less than the preset safe passage width, wherein the second preset range is smaller than the first preset range.

The control module is further configured to in a case that an obstacle is located in front of the current travel lane of the vehicle within the first preset range around the vehicle, the safe driving width of the current travel lane of the vehicle is less than the preset safe passage width, and in a case that no obstacle is located in the adjacent lane within a second preset range around the vehicle and an obstacle is located in front of the adjacent lane within the first preset range around the vehicle, if a safe driving width of the adjacent lane is greater than the preset safe passage width, control the lane line generation module to generate a second dynamic target line of the adjacent lane according to the safe driving width of the adjacent lane; and if the safe driving width of the adjacent lane is less than the preset safe passage width, control the vehicle to decelerate.

In a possible implementation, the control module is further configured to generate a dynamic target line after the vehicle returns to an initial travel lane, when the vehicle travels along the first dynamic target line of the adjacent lane or the second dynamic target line of the adjacent lane, in a case that no obstacle is located at the initial travel lane within the first preset range around the vehicle, and no obstacle is located at a side and a rear of a vehicle within the second preset range around the vehicle.

In a possible implementation, the system for generating the dynamic target line in the vehicle automatic driving process further includes: an electronic map providing module configured to provide an electronic map of a preset range around the vehicle when the vehicle travels along the first dynamic target line of the adjacent lane or the second dynamic target line of the adjacent lane, wherein the electronic map includes lane lines of all lanes at an entrance of a ramp and vehicle information for all vehicles at the entrance of the ramp; the information acquisition module is further configured to acquire a transverse closest distance between the vehicle and each vehicle in the ramp according to a curvature of a lane line and acquire a transverse position closest point between the vehicle and a front vehicle in the current lane, in a case that a preset condition for an entrance ramp is not met; the lane line generation module is further configured to generate a first lane line parallel to the curvature of the lane line according to the transverse closest distance, and generate a safe driving region according to the first lane line, a current position of the vehicle and the transverse position closest point between the vehicle and the front vehicle, and generate a safety offset line according to the safe driving region; and the control module is further configured to determine whether the vehicle satisfies the preset condition for the entrance ramp.

In a possible implementation, the lane line generation module is further configured to generate a second lane line by translating the first lane line for a preset distance along a direction of passing through the transverse position closest point between the vehicle and the front vehicle; generate a third lane line which passes through the transverse position closest point between the vehicle and the front vehicle and is perpendicular to the first lane line; generate a fourth lane line which passes through a current position of the vehicle and is perpendicular to the curvature of the lane line; and generate the safe driving region according to the first lane line, the second lane line, the third lane line, and the fourth lane line.

In a possible implementation, the lane line generation module is further configured to generate the safety offset line according to the first lane line, the second lane line, the third lane line, and the fourth lane line, wherein a curvature of the safety offset line is equal to the curvature of the lane line, a distance between the safety offset line and the first lane line is equal to a distance between the safety offset line and the second lane line, and the safety offset line intersects the third lane line and the fourth lane line, respectively.

In a possible implementation, the preset condition for the entrance ramp includes: no vehicle at a lateral position of the vehicle in the ramp; a predicted collision time of the vehicle and the front vehicle being greater than a first preset time and a distance between the vehicle and the front vehicle being greater than a first preset distance; and a predicted collision time of the vehicle and a rear vehicle being greater than the second preset time and a distance between the vehicle and the rear vehicle being greater than the second preset distance.

In a possible implementation, the control module is further configured to control the lane line generation module to generate a third dynamic target line of the current travel lane of the vehicle according to a position and a shape of a vehicle obstacle, and the curvature and the width of the current travel lane of the vehicle, in a case that within the first preset range around the vehicle, the obstacle is located at a side of the vehicle, and at least a part of the obstacle is located in the current travel lane of the vehicle.

In a possible implementation, the system for generating the dynamic target line in the vehicle automatic driving process further includes a positioning module configured to acquire the current position of the vehicle, wherein the control module is further configured to acquire road environment information within the first preset range around the vehicle according to the current position of the vehicle, and generate a curvature and a width of each lane of a current travel section according to the current position of the vehicle and the road environment information within the first preset range around the vehicle, and generate a fitting lane line of all lanes according to the curvature and the width of each lane of the current travel section.

The system for generating the dynamic target line in the vehicle automatic driving process has the same advantage over the conventional technology as the above method for generating the dynamic target line in the vehicle automatic driving process, which will not be further described herein.

Another object of the present invention is to provide a vehicle, which can generate optimal dynamic target lines for different environments, so as to drive the vehicle according to the generated target line when the vehicle is automatically driven.

To achieve the above object, the technical solutions of the present invention are implemented as follows.

A vehicle, in which the method for generating the dynamic target line in the vehicle automatic driving process according to the above embodiment is applied.

The vehicle has the same advantage over the conventional technology as the above system for generating the dynamic target line in the vehicle automatic driving process, which will not be further described herein.

### BRIEF DESCRIPTION OF THE DRAWINGS

The accompanying drawings, which form a part of this invention, serve to provide a further understanding of the present invention, and are intended to be illustrative of the present invention and are not intended to inappropriately limit this invention. In the drawings:
FIG. 1 is a flowchart of a method for generating a dynamic target line in a vehicle automatic driving process according to an embodiment of the present invention;
FIG. 2 is a schematic diagram of a generation of a dynamic target line according to an embodiment of the present invention;
FIG. 3 is a schematic diagram of a generation of a dynamic target line according to another embodiment of the present invention;
FIG. 4 is a schematic diagram of a generation of a dynamic target line according to yet another embodiment of the present invention;
FIG. 5 is a schematic diagram of a vehicle returning to an initial travel lane according to an embodiment of the present invention;
FIG. 6 is a flowchart of a method for generating a dynamic target line in a vehicle automatic driving process according to an embodiment of the present invention;
FIG. 7 is a schematic diagram of a generation of a safety offset line according to an embodiment of the present invention;
FIG. 8 is a schematic diagram of a generation of a dynamic target line when an obstacle is located at a side of the vehicle according to an embodiment of the present invention;
FIG. 9 is a schematic diagram of a vehicle generating a dynamic target line according to an embodiment of the present invention;
FIG. 10 is a block diagram of a system for generating a dynamic target line in a vehicle automatic driving process according to an embodiment of the present invention; and
FIG. 11 is a structural block diagram of a system for generating a dynamic target line in a vehicle automatic driving process according to an embodiment of the present invention;

### DETAILED DESCRIPTION

It should be noted that, without conflict, embodiments of the invention and features in the embodiments may be combined with each other.

The present invention will now be described in detail with reference to the accompanying drawings.

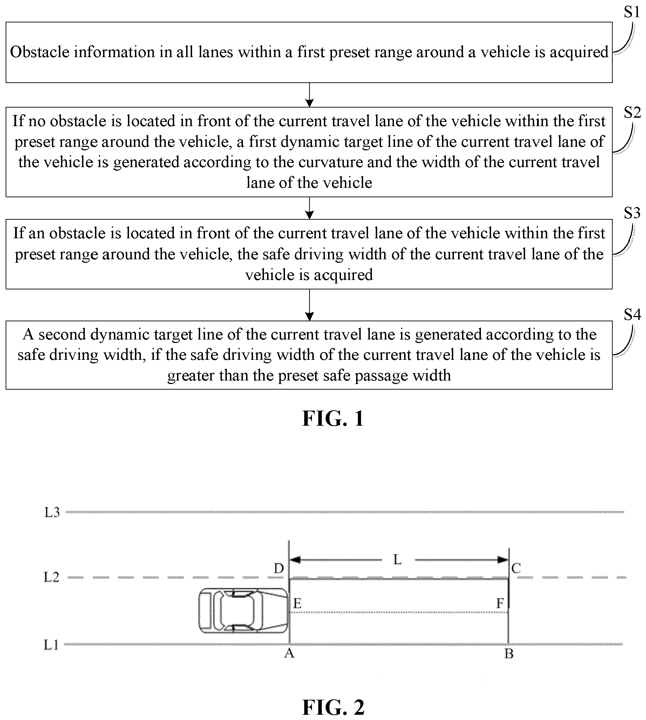

FIG. 1 is a flow chart of a method for generating a dynamic target line in a vehicle automatic driving process according to an embodiment of the present invention.

As shown in FIG. 1, a method for generating a dynamic target line in a vehicle automatic driving process according to an embodiment of the present invention includes the following steps.

In S1, obstacle information in all lanes within a first preset range around a vehicle is acquired.

Specifically, multiple sensors are installed on the vehicle to form an environment sensing system. The obstacle information in all lanes within a preset range in front of the vehicle is sensed by the environment sensing system. The environment sensing system acquires current driving environment information of the vehicle, such as vehicles, pedestrians, climate, and roads. Then, a processing, such as screening, correlation, tracking and filter is performed on data information sensed by different sensors, so as to obtain more accurate information, such as road information, and a target location, a speed and a size of an object. In an implementation of the present invention, the first preset range is a circular region with a radius of 200 meters around the vehicle, which can be set according to the road condition and the vehicle speed and adjusted according to the demand.

In an embodiment of the present invention, between steps S1 and S2, the method further includes the following steps.

A current position of a vehicle is acquired. The vehicle may be positioned by a high-precision GPS positioning device.

Road environment information within a first preset range around the vehicle is acquired according to the current position of the vehicle. The road environment information within the first preset range around the vehicle can be obtained by a navigation system in combination with the environment sensing system of the vehicle.

A curvature and a width of each lane of the current travel section are generated, based on the current position of the vehicle and the road environment information within the preset range in front of the vehicle.

A fitted lane line for all lanes is generated based on the curvature and the width of each lane of the current travel section. The control system processes the current position of the vehicle and the road environment information within the preset range in front of the vehicle, and then outputs in real time longitudes and latitudes (taking the geocenter as the origin) of discrete points on the lane line for a high-precision map in the range of 200m around the autonomous vehicle, course angles of the discrete points (taking the true north as 0° and clockwise as a positive direction), the lane line type, a width of each lane, the number of lane, a road boundary and the like. In this way, the high-precision map is formed. The high-precision map has an output point distance of 2-5m, which can be set according to the demand. Then, an equidistant discrete processing is performed on the fitting curve to obtain processed discrete data points of the high-precision map. Finally, coordinates of the processed discrete data points are converted into a body coordinate system of an automatic vehicle.

In S2, if no obstacle is located in front of the current travel lane of the vehicle within the first preset range around the vehicle, a first dynamic target line of the current travel lane of the vehicle is generated according to the curvature and the width of the current travel lane of the vehicle. The obstacle may include a roadblock, a traffic cone, an unmovable accident vehicle, and a vehicle that is moving.

FIG. 2 is a schematic diagram of a generation of a dynamic target line according to an embodiment of the present invention. As shown in FIG. 2, L is the aforementioned preset range. In this example, L is 200 meters, and three lane lines are indicated as L1, L2, and L3, respectively. Due to no obstacle within 200 meters in the current travel lane in front of the vehicle, the vehicle can drive in the safe region ABCD, and the dynamic target line is the center line EF which intersects AD and BC. The center line EF typically is a center line of the current travel lane.

In S3, if an obstacle is located in front of the current travel lane of the vehicle within the first preset range around the vehicle, the safe driving width of the current travel lane of the vehicle is acquired.

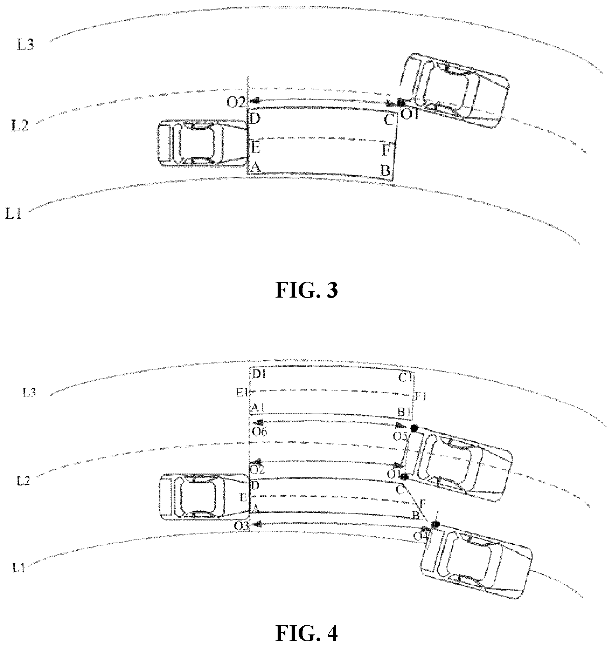

FIG. 3 is a schematic diagram of a generation of a dynamic target line according to another embodiment of the present invention. As shown in FIG. 3, three lane lines are indicated as L1, L2, and L3, respectively. When an obstacle is located in the preset range of the current travel lane, the safe region in which the vehicle can travel narrows. Thus, the travel safe region should be recalculated, to acquire a longitudinal closest point O1 between the object target and the autonomous vehicle, and acquire a longitudinal closest distance 0102 between the object target and the autonomous vehicle according to a curvature of the road. The vehicle can drive in the safe region ABCD of the current lane, wherein the width AD and BC of the safe region are the safe driving width.

In S4, a second dynamic target line of the current travel lane is generated according to the safe driving width, if the safe driving width of the current travel lane of the vehicle is greater than the preset safe passage width.

When the width AD and BC is greater than the preset safe passage width (e.g., 2.4M (1.2*vehicle width)), the vehicle will not collide with the object target, and the vehicle can safely pass. In this way, the second dynamic target line EF of the current travel lane is output.

In an embodiment of the present invention, after the step S3, the method further includes: if the safe driving width of the current travel lane of the vehicle is less than the preset safe passage width, i.e., the vehicle is unable to safely pass within the current travel lane, whether an obstacle is located in an adjacent lane within the first preset range around the vehicle is determined; and if no obstacle is located in the adjacent lane within the first preset range around the vehicle, a first dynamic target of the adjacent lane is generated.

In an embodiment of the present invention, after determining whether an obstacle is located in the adjacent lane within a first preset range around the vehicle, the method further includes: controlling the vehicle decelerate if an obstacle is located in the adjacent lane within a second preset range around the vehicle. The second preset range is smaller than the first preset range. In some implementations, the second preset range is a region with a diameter of 20 meters, which can be adjusted as needed. That is, when the current travel lane cannot pass, if an obstacle exists in an adjacent lane in a circular region with a radius of 20 meters around the vehicle, the vehicle cannot safely change to the adjacent lane. At this time, the vehicle is controlled to decelerate. In an embodiment of the present invention, the method for generating the dynamic target line in the vehicle automatic driving process further includes the following steps.

If no obstacle is located in the adjacent lane in the second preset range around the vehicle and an obstacle is located in front of the vehicle in the adjacent lane within the first preset range around the vehicle, the vehicle can safely change to the adjacent lane, but there is an obstacle in the adjacent lane. In this case, the safe driving width of the adjacent lane needs to be acquired. The manner for calculating the safe traffic width in the adjacent lane is the same as that for calculating the width of the current travel lane. If the safe driving width of the adjacent lane is greater than the preset safe passage width, the vehicle may avoid the obstacle and travel on the adjacent lane. In this case, the second dynamic target line of the adjacent lane is generated according to the safe driving width of the adjacent lane.

If the safe travel width of the adjacent lane is less than the preset safe passage width, the vehicle cannot avoid obstacles in the adjacent lane. In this case, the vehicle is controlled to decelerate and does not change to the adjacent lane.

FIG. 4 is a schematic diagram of a generation of a dynamic target line according to yet another embodiment of the present invention.

As shown in FIG. 4, the three lane lines are indicated as L1, L2 and L3, respectively. When an obstacle is located in front of the vehicle within the range of 200 m in the current travel lane, the safe region in which the autonomous vehicle can drive narrows. The longitudinal closest points O1 and O4 between each of the object targets and the autonomous vehicle are acquired. A longitudinal closest distance 0102 between the autonomous vehicle and the object target is obtained by translating the lane line L2 to pass through the O1 point, and a longitudinal closest distance O3O4 between the autonomous vehicle and the object target is obtained by translating the lane line L1 to pass through the O4 point, so as to obtain the safe region ABCD in which the vehicle can drive in the current lane. When a width AD of the safe region in which the vehicle can drive in the current lane is less than the safe passage width (e.g., 2.4 M), the vehicle in the current lane has a risk of collision with the front object target, and the autonomous vehicle cannot safely pass through the current travel lane.

A longitudinal closest point O5 of the adjacent lane is obtained, and the longitudinal closest distance O5O6 between the autonomous vehicle and the object target is obtained by translating the lane line L2 to pass through the point 05, the vehicle can travel in a safe region A1B1C1D1 in the adjacent lanes. If a distance between A1 and D1 is greater than the safe passage width (e.g., 2.4m), a second dynamic target line of the adjacent lane is generated, which is a center line E1F1 intersecting A1D1 and B1C1. If the distance between the A1D1 is less than the safe passage width (e.g., 2.4m), the vehicle is controlled to decelerate.

In an embodiment of the present invention, the method for generating the dynamic target line in the vehicle automatic driving process further includes: when the vehicle travels along the first dynamic target line of the adjacent lane or the second dynamic target line of the adjacent lane, if no obstacle is located in an initial travel lane within the first preset range around the vehicle and no obstacle is located at a side and a rear of the vehicle within the second preset range around the vehicle, a dynamic target line after the vehicle returns to the initial travel lane is generated.

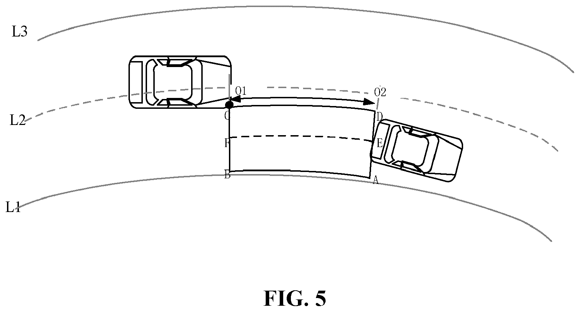

FIG. 5 is a schematic diagram of a vehicle returning to an initial travel lane according to an embodiment of the present invention. As shown in FIG. 5, if on vehicle is located at a side of an ego vehicle, no vehicle is located in front of the ego vehicle within the first preset range (e.g., 200 meters) around the vehicle in the initial travel lane, and a distance 0102 between the ego vehicle and the closest rear vehicle in the initial travel lane is greater than a safe distance (e.g., 20 meters), the dynamic target line after the vehicle returns to the initial travel lane is generated.

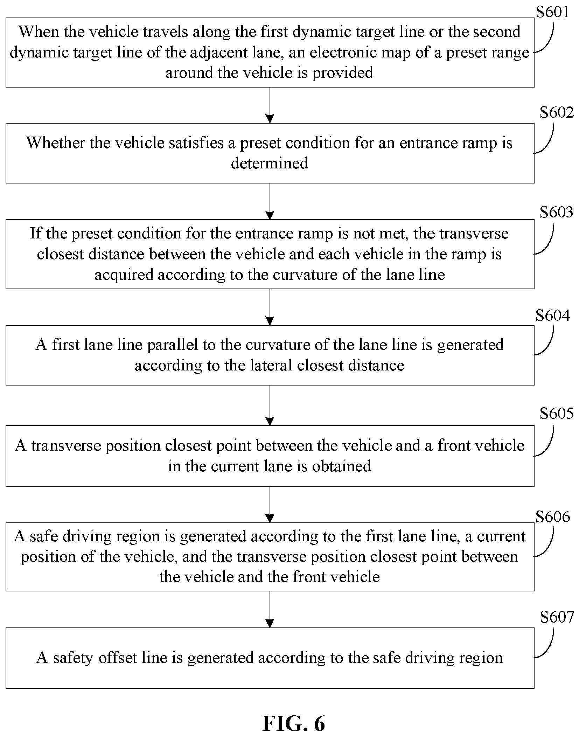

As shown in FIG. 6, a method for generating a dynamic target line in a vehicle automatic driving according to an embodiment of the present invention further includes the following steps.

In S601, when the vehicle travels along the first dynamic target line of the adjacent lane or the second dynamic target line of the adjacent lane, an electronic map of a preset range around the vehicle is provided. The electronic map includes lane lines of all lanes at an entrance of a ramp and vehicle information for all vehicles at the entrance of the ramp.

In an embodiment of the present invention, step S601 specifically includes:
acquiring position information of a vehicle; a position, a speed and a size of a target object within a preset range around the vehicle; and information on a lane position and a lane width within the preset range around the vehicle; and generating an electronic map according to the position information of the vehicle, the position, the speed and the size of the vehicle within the preset range around the vehicle, and the information on the lane position and the lane width within the preset range around the vehicle.

In particular, instead of the driver sensory system, an environmental sensing system is installed on the vehicle to acquire, by different sensors, current driving environment information, such as, vehicles, pedestrians, climate, roads, vehicle location, and vehicle size. The above environment information is screened, correlated, tracked, filtered and the like, so as to obtain more accurate information, such as road information, and a position, a speed and a size of an object target. Finally, the electronic map is generated. The electronic map outputs in real time lane position and lane width information within the preset range (e.g., 200 meters) behind and before the vehicle, as well as location, size, and speed information for all vehicles and pedestrians (if any) in this range.

In S602, whether the vehicle satisfies a preset condition for an entrance ramp is determined.

In an embodiment of the present invention, the preset condition for the entrance ramp includes the following conditions.
1. No vehicle is located at a lateral position of the vehicle within the ramp. If the curvature of the current lane is zero (i.e., the current lane is horizontal or vertical), the lateral position of the vehicle is a position of a right lane (i.e., the ramp) of the current position of the vehicle. If the curvature of the current lane is not zero (i.e., the current lane is curved), the lateral position of the vehicle is a position obtained by translating the current position of the vehicle to the right lane (i.e., the ramp) (the curvature of the current lane needs to be considered).
2. A predicted collision time of the vehicle and the front vehicle is greater than the first preset time, and a distance between the vehicle and the front vehicle is greater than the first preset distance. In an embodiment, the predicted collision time = relative speed/relative distance, the relative speed = ego vehicle speed-front vehicle speed (or rear vehicle speed). In an embodiment of the present invention, the first preset time is 2 seconds, and the first preset distance is 10 meters.
3. A predicted collision time of the vehicle and the rear vehicle is greater than a second preset time, and a distance between the vehicle and the rear vehicle is greater than a second preset distance. In one embodiment of the present invention, the second preset time is 2 seconds, and the first preset distance is 8 meters.

That is, when the above three conditions are met, the vehicle can drive into the ramp, otherwise the vehicle cannot drive into the ramp.

In S603, if the preset condition for the entrance ramp is not met, the transverse closest distance between the vehicle and each vehicle in the ramp is acquired according to the curvature of the lane line. The transverse closest distance is a closest distance in a direction perpendicular to the lane line.

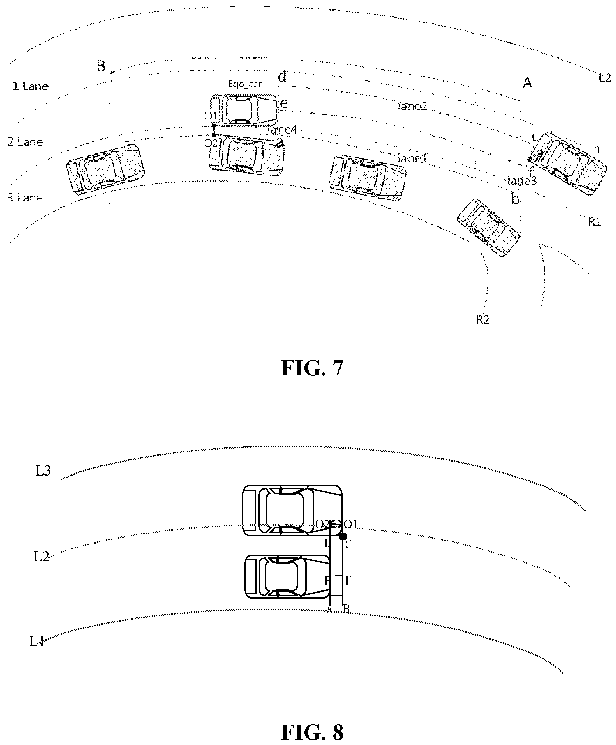

FIG. 7 is a schematic diagram of a generation of a safety offset line according to an embodiment of the present invention. As shown in FIG. 7, the current travel section of the autonomous vehicle EGO_CAR includes three lanes, i.e., a lane 1, a lane 2, and a lane 3. The autonomous vehicle EGO_CAR is driving in the lane 2. When reaching B point (the A point and the B point are set according to the automatic driving rule), the autonomous driving vehicle EGO_CAR wants to drive into the ramp. The autonomous vehicle EGO_CAR obtains a transverse closest distance 0102 between an object target (an object target in the target lane) and the autonomous vehicle, within an active detection area.

In S604, a first lane line i.e., lane 1, parallel to the curvature of the lane line is generated according to the lateral closest distance.

In S605, a transverse position closest point g between the vehicle and a front vehicle in the current lane is obtained.

In S606, a safe driving region is generated according to the first lane line, a current position of the vehicle, and the transverse position closest point g between the vehicle and the front vehicle.

In an embodiment of the present invention, the step S606 specifically includes the following steps.

A second lane line lane 2 is generated by translating the first lane line lane 1 for a preset distance along a direction of passing through the transverse position closest point g between the vehicle and the front vehicle. In an embodiment, the preset distance = vehicle width + redundancy width threshold. In an example of the present invention, the vehicle width is 2M, and the redundancy width threshold is 0.8M. In this case, the preset distance is 2.8M.

A third lane line lane 3 is generated, which passes through the transverse position closest point g between the vehicle and the front vehicle and is perpendicular to the first lane line lane 1.

A fourth lane line lane 4 is generated, which passes through a current position of the vehicle and is perpendicular to the curvature of the lane line.

The safe driving region ABCD is generated according to the first lane line lane 1, the second lane line lane 2, the third lane line lane 3, and the fourth lane line lane 4.

In S707, a safety offset line is generated according to the safe driving region ABCD.

In an embodiment of the present invention, the step S707 specifically includes:
generating the safety offset line according to the first lane line lane 1, the second lane line lane 2, the third lane line lane 3, and the fourth lane line lane 4. A curvature of the safety offset line is equal to the curvature of the lane line. A distance between the safety offset line and the first lane line is equal to a distance between the safety offset line and the second lane line, and the safety offset line respectively intersects the third lane line and the fourth lane line. That is, the safe offset line EF is generated by taking the midpoint E of the AD and the midpoint F of the BC.

Thus, in the above-described embodiments, first an electronic map of a preset range around the vehicle is generated, and lane lines of all lanes at an entrance of a ramp and vehicle information for all vehicles at the entrance of the ramp is provided on the electronic map. Then, whether the vehicle can drive into the ramp is determined. When the vehicle cannot drive into the ramp, the safe driving region is generated according to the transverse closest distance between the vehicle and a vehicle in the ramp and the closest distance between the vehicle and the front vehicle. The safety offset line is generated according to the safe driving region, such that the vehicle can drive according to the safe offset line. In this way, an optimal route of the vehicle automatic driving into the ramp is provided, so as to improve the safety of the vehicle automatic driving.

In an embodiment of the present invention, the method for generating the dynamic target line in the vehicle automatic driving process further includes: generating a third dynamic target line of the current travel lane of the vehicle according to a position and a shape of an obstacle, and the curvature and the width of the current travel lane of the vehicle, in the case that in the first preset range around the vehicle, the obstacle is located at a side of the vehicle, and at least a part of the obstacle is located in the current travel lane of the vehicle.

FIG. 8 is a schematic diagram of a generation of a dynamic target line when an obstacle is located at a side of the vehicle according to an embodiment of the present invention. As shown in FIG. 8, when a vehicle enters a current lane at a side of the ego vehicle, the ego vehicle is controlled to adjust the dynamic target line of the ego vehicle according to the position and the size of the side vehicle in the current lane, to generate the third dynamic target line of the current travel lane, i.e., the line EF. FIG. 7 is a schematic diagram of a vehicle generating a dynamic target line according to an embodiment of the present invention.

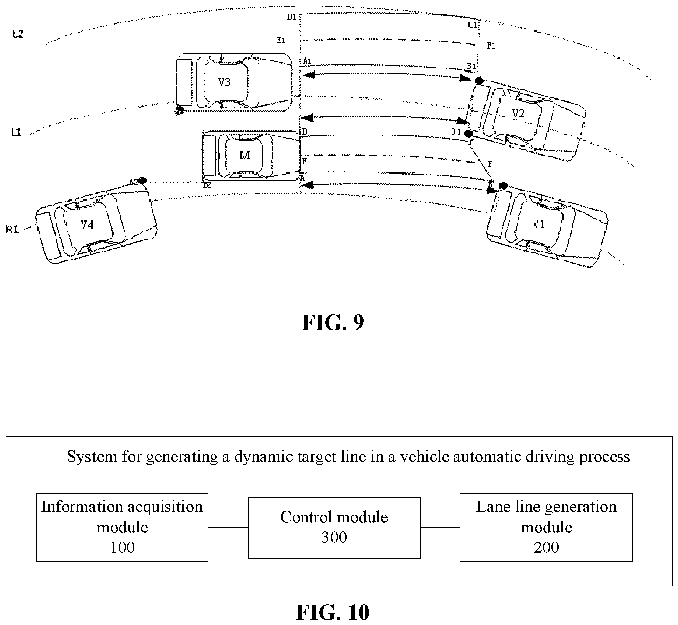

As shown in FIG. 9, the ego vehicle M finds obstacles, that is, the vehicle V1 and the vehicle V2, in the current travel lane within the first preset range in the driving process. In this case, whether the safe driving width AD in the current travel lane is greater than the preset safe passage width needs to be determined.

If the safe driving width AD of the current travel lane is greater than the preset safe passage width, the dynamic target line EF of the current travel lane is generated.

If the safe driving width AD of the current travel lane is not greater than the preset safe passage width, it is determined whether an obstacle is located in the adjacent lane within the first preset range. Due to no lane at the right side of the ego vehicle M (the vehicle V4 is parked on the line), it is only necessary to consider whether a dynamic target line of the left lane can be generated.

If a vehicle V3 is located at the left side of the ego vehicle M, it is determined whether T3 is within a second preset range (e.g., a circular range with a radius of 20 meters) around the ego vehicle M. Since the vehicle V3 is within the second preset range of the ego vehicle M, the ego vehicle M is controlled to decelerate.

If a vehicle V3 is not located at the left side of the ego vehicle M, it is determined whether the safe driving width B1C1 of the left lane is greater than the preset safe passage width. If the safe driving width B1C1 of the left lane is greater than the preset safe passage width, the dynamic target line E1F1 of the left lane is generated. If the safe driving width B1C1 of the left lane is not greater than the preset safe passage width, the ego vehicle M is controlled to decelerate.

According to the method for generating the dynamic target line in the vehicle automatic driving, whether the vehicle can safely pass through the current travel lane is determined according to the obstacle information and the vehicle information in all lanes within the preset range in front of the vehicle. If the vehicle can safely pass through the current travel lane, the dynamic target line of the current travel lane is output so that the vehicle can travel according to the dynamic target line of the current travel lane. If the vehicle cannot safely pass through the current travel lane, whether the vehicle can safely pass through an adjacent lane is determined. If the vehicle can safely pass through the adjacent lane, a dynamic target line of the adjacent lane is generated, so that the vehicle travels according to the dynamic target line of the adjacent lane. If the vehicle cannot safely pass through the current travel lane and the adjacent lane, the vehicle is controlled to decelerate. When the vehicle changes the lane, if the initial lane meets the driving requirement and the distance between the vehicle and the rear vehicle in the initial lane is greater than the safe distance, the vehicle is controlled to drive back to the initial lane and generate the dynamic target line of the initial lane. The front vehicle driving in the preset range in the present embodiment can be regarded as a fixed obstacle at a certain moment. When the position of the front vehicle in the preset range changes, the generated dynamic target line is updated in real time, so as to ensure that the vehicle can travel according to the current dynamic target line when the vehicle is automatically driven.

FIG. 10 is a block diagram of a system for generating a dynamic target line in a vehicle automatic driving process according to an embodiment of the present invention. As shown in FIG. 10, a system for generating a dynamic target line in a vehicle automatic driving process according to an embodiment of the present invention includes an information acquisition module 100, a lane line generation module 200, and a control module 300.

The information acquisition module 100 is configured to acquire obstacle information in all lanes within a preset range around the vehicle. The lane line generation module 200 is configured to generate a dynamic lane line. The control module 300 is configured for controlling the lane line generation module 200 to generate a first dynamic target line of a current travel lane of a vehicle according to a curvature and a width of the current travel lane of the vehicle, in the case of no obstacle exists in front of the current travel lane of the vehicle within a first preset range around the vehicle; to acquire a safe driving width of the current travel lane of the vehicle according to the obstacle information in front of the current travel lane of the vehicle, in the case that the obstacle is located in front of the current travel lane of the vehicle; and to control the lane line generation module 200 to generate a second dynamic target line of the current travel lane according to the safe driving width of the current travel lane, in the case that the safe driving width of the current travel lane of the vehicle is greater than the preset safe passage width.

In one embodiment of the present invention, the control module 300 is further configured to control the lane line generation module 200 to generate a first dynamic target line of an adjacent lane if there is an obstacle in a first preset range near the vehicle, in the case that an obstacle is located in front of the current travel lane of the vehicle, the safe driving width of the current travel lane of the vehicle is less than the preset safe passage width, and no obstacle is located in the adjacent lane, within a first preset range around the vehicle.

In an embodiment of the present invention, the control module 300 is further configured to control the vehicle deceleration in the case that an obstacle is located in front of the current travel lane of the vehicle within the first preset range around the vehicle and the safe driving width of the current travel lane of the vehicle is less than the preset safe passage width. In an embodiment, the second preset range is smaller than the first preset range.

In an embodiment of the present invention, the control module 300 is further configured to in a case that an obstacle is located in front of the current travel lane of the vehicle within the first preset range around the vehicle, the safe driving width of the current travel lane of the vehicle is less than the preset safe passage width, and in a case that no obstacle is located in the adjacent lane within a second preset range around the vehicle and an obstacle is located in front of the adjacent lane within the first preset range around the vehicle, if a safe driving width of the adjacent lane is greater than the preset safe passage width, control the lane line generation module 200 to generate a second dynamic target line of the adjacent lane according to the safe driving width of the adjacent lane; and if the safe driving width of the adjacent lane is less than the preset safe passage width, control the vehicle to decelerate.

In an embodiment of the present invention, the control module 300 is further configured to control the lane line generation module 200 to generate a dynamic target line after the vehicle returns to an initial travel lane, when the vehicle travels along the first dynamic target line of the adjacent lane or the second dynamic target line of the adjacent lane, in the case that no obstacle is located in the initial travel lane in the first preset range around the vehicle, and no obstacle is located at a side and a rear of the vehicle in the second preset range around the vehicle.

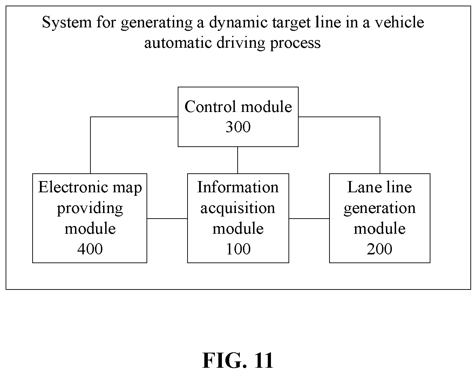

In an embodiment of the present invention, as shown in FIG. 11, the system further includes an electronic map providing module 400. The electronic map providing module 400 is configured to provide an electronic map of a preset range around the vehicle when the vehicle travels along the first dynamic target line of the adjacent lane or the second dynamic target line of the adjacent lane, wherein the electronic map includes lane lines of all lanes at an entrance of a ramp and vehicle information for all vehicles at the entrance of the ramp. The information acquisition module 100 is further configured to acquire a transverse closest distance between the vehicle and each vehicle in the ramp according to a curvature of a lane line and acquire a transverse position closest point between the vehicle and a front vehicle in the current lane in a case that a preset condition for an entrance ramp is not met. The lane line generation module 200 is further configured to generate a first lane line parallel to the curvature of the lane line according to the transverse closest distance; generate a safe driving region according to the first lane line, a current position of the vehicle and the transverse position closest point between the vehicle and the front vehicle; and generate a safety offset line according to the safe driving region. The control module 300 is further configured to determine whether the vehicle satisfies the preset condition for the entrance ramp.

In an embodiment of the present invention, the lane line generation module 200 is further configured to generate a second lane line by translating the first lane line for a preset distance along a direction of passing through the transverse position closest point between the vehicle and the front vehicle; generate a third lane line which passes through the transverse position closest point between the vehicle and the front vehicle and is perpendicular to the first lane line; generate a fourth lane line which passes through a current position of the vehicle and is perpendicular to the curvature of the lane line; and generate the safe driving region according to the first lane line, the second lane line, the third lane line, and the fourth lane line.

In an embodiment of the present invention, the lane line generation module 200 is further configured to generate the safety offset line according to the first lane line, the second lane line, the third lane line, and the fourth lane line, wherein a curvature of the safety offset line is equal to the curvature of the lane line, a distance between the safety offset line and the first lane line is equal to a distance between the safety offset line and the second lane line, and the safety offset line intersects the third lane line and the fourth lane line, respectively.

In an embodiment of the present invention, the preset condition for the entrance ramp includes: no vehicle in a lateral position of the vehicle in the ramp; a predicted collision time of the vehicle and the front vehicle being greater than a first preset time and a distance between the vehicle and the front vehicle being greater than a first preset distance; and a predicted collision time of the vehicle and a rear vehicle being greater than a second preset time and a distance between the vehicle and the rear vehicle being greater than a second preset distance. In an embodiment of the present invention, the control module 300 is further configured to control the lane line generation module 200 to generate a third dynamic target line of the current travel lane of the vehicle according to a position and a shape of a vehicle obstacle and the curvature and the width of the current travel lane of the vehicle, in the case that within a first preset range around the vehicle, the obstacle is located at a side of the vehicle, and at least a part of the obstacle is located in the current travel lane of the vehicle.

In an embodiment of the present invention, the system for generating the dynamic target line in the vehicle automatic driving process further includes: a positioning module. The positioning module is configured to acquire the current position of the vehicle. The control module 300 is further configured to generate a curvature and a width of each lane of a current travel section according to the current position of the vehicle and the road environment information within the first preset range around the vehicle, and control the lane line generation module 200 to generate a fitted lane line of all lanes according to the curvature and width of each lane of the current travel section.

According to the system for generating the dynamic target line in the vehicle automatic driving process, whether the vehicle can safely pass through the current travel lane is determined according to the obstacle information and the vehicle information in all lanes within the preset range in front of the vehicle. If the vehicle can safely pass through the current travel lane, the dynamic target line of the current travel lane is output so that the vehicle can travel according to the dynamic target line of the current travel lane. If the vehicle cannot safely pass through the current travel lane, whether the vehicle can safely pass through an adjacent lane is determined. If the vehicle can safely pass through the adjacent lane, a dynamic target line of the adjacent lane is generated so that the vehicle travels according to the dynamic target line of the adjacent lane. If the vehicle cannot safely pass through the current travel lane and the adjacent lane, the vehicle is controlled to decelerate. When the vehicle changes the lane, if the initial lane meets the driving requirement and the distance between the vehicle and the rear vehicle in the initial lane is greater than the safe distance, the vehicle is controlled to drive back to the initial lane and generate the dynamic target line of the initial lane. In the embodiment, the front vehicle driving in the preset range can be regarded as a fixed obstacle at a certain moment. When the position of the front vehicle within the preset range changes, the generated dynamic target line is updated in real time, so as to ensure that the vehicle can travel according to the current dynamic target line when the vehicle is automatically driven.

It should be noted that the specific implementation mode of the system for generating the dynamic target line in the vehicle automatic driving process according to the embodiment of the present invention is similar to the specific implementation mode of the method for generating the dynamic target line in the vehicle automatic driving process according to the embodiment of the present invention. The specific description can refer to the description of the method embodiment. In order to reduce the redundancy, the description is not repeated herein.

Further, a vehicle is provided according to an embodiment of the present invention, in which the system for generating the dynamic target line in the vehicle automatic driving process in any one of the above embodiments is applied. The vehicle may generate optimal dynamic target lines for different environments, thereby driving the vehicle according to the generated target line when the vehicle is automatically driven.

In addition, other configurations and effects of vehicles according to embodiments of the present invention are known to those of ordinary skill in the art, which will not be repeated herein to reduce redundancy.

The above description only shows preferred embodiments of the present invention, which will not be used to limit the invention. Any modification, replacement, and improvement made within the scope of the appended claims shall be included in the protection scope.

## Claims

1. A method for generating a dynamic target line in a vehicle automatic driving process, comprising:
acquiring (S1) obstacle information in all lanes within a first preset range around a vehicle,
generating (S2)
a first dynamic target line of a current travel lane of the vehicle according to a curvature and a width of the current travel lane of the vehicle, in a case of no obstacle is located in front of the vehicle within the current travel lane within the first preset range around the vehicle;
acquiring (S3) a safe driving width of the current travel lane of the vehicle, in a case that an obstacle is located in front of the vehicle within the current travel lane; and
generating (S4) a second dynamic target line of the current travel lane according to the safe driving width, in a case that the safe driving width of the current travel lane of the vehicle is greater than a preset safe passage width
wherein after the obtaining the safe driving width of the current travel lane, the method further comprises:
determining whether an obstacle is located in an adjacent lane within the first preset range around the vehicle, in a case that the safe driving width of the current travel lane of the vehicle is less than the preset safe passage width; and
generating a first dynamic target line of the adjacent lane, in a case of no obstacle in the adjacent lane within the first preset range around the vehicle,
wherein after determining whether an obstacle is located in the adjacent lane within the first preset range around the vehicle, the method further comprises:
in a case that an obstacle is located in the adjacent lane within a second preset range around the vehicle, controlling the vehicle to decelerate, wherein the second preset range is smaller than the first preset range,
**characterized in that**
acquiring a safe driving width of the adjacent lane, in a case that no obstacle is located in the adjacent lane within the second preset range around the vehicle and an obstacle is located in front of the vehicle in the adjacent lane within the first preset range around the vehicle;
generating a second dynamic target line of the adjacent lane according to the safe driving width of the adjacent lane, in a case that the safe driving width of the adjacent lane is greater than the preset safe passage width; and
controlling the vehicle to decelerate, in a case that the safe driving width of the adjacent lane is less than the preset safe passage width.

2. The method for generating the dynamic target line in the vehicle automatic driving process as claimed in claim 1 further comprising:
when the vehicle travels along the first dynamic target line of the adjacent lane or the second dynamic target line of the adjacent lane, in a case that no obstacle is located at the initial travel lane within the first preset range around the vehicle and no obstacle is located at a side and a rear of the vehicle within the second preset range around the vehicle, generating a dynamic target line after the vehicle returns to the initial travel lane.

3. The method generating the dynamic target line in the vehicle automatic driving process as claimed in any one of claims 1 to 2, further comprising:
providing an electronic map of a preset range around the vehicle when the vehicle travels along the first dynamic target line of the adjacent lane or the second dynamic target line of the adjacent lane, wherein the electronic map comprises lane lines of all lanes at an entrance of a ramp and vehicle information for all vehicles at the entrance of the ramp;
determining whether the vehicle satisfies a preset condition for an entrance ramp; and
in a case that the preset condition for the entrance ramp is not met, acquiring a transverse closest distance between the vehicle and a vehicle in the ramp according to a curvature of the lane lines;
generating a first lane line parallel to the curvature of the lane line according to the transverse closest distance;
acquiring a closest point of a transverse position between the vehicle and a front vehicle in a current lane;
generating a safe driving region according to the first lane line, a current position of the vehicle, and the closest point of the transverse position between the vehicle and the front vehicle; and
generating a safety offset line according to the safe driving region.

4. The method for generating the dynamic target line in the vehicle automatic driving process as claimed in claim 3, wherein the generating a safe driving region according to the first lane line, the current position of the vehicle, and the transverse position closest point between the vehicle and the front vehicle comprises:
generating a second lane line by translating the first lane line for a preset distance along a direction of passing through the transverse position closest point between the vehicle and the front vehicle;
generating a third lane line which passes through the transverse position closest point between the vehicle and the front vehicle and is perpendicular to the first lane line;
generating a fourth lane line which passes through the current position of the vehicle and perpendicular to the curvature of the lane line; and
generating the safe driving region according to the first lane line, the second lane line, the third lane line, and the fourth lane line.

5. The method for generating the dynamic target line in the vehicle automatic driving process as claimed in claim 4, wherein the generating a safety offset line according to the safe driving region further comprises:
generating the safety offset line according to the first lane line, the second lane line, the third lane line and the fourth lane line,
wherein a curvature of the safety offset line is equal to the curvature of the lane line, a distance between the safety offset line and the first lane line is equal to a distance between the safety offset line and the second lane line, and the safety offset line intersects the third lane line and the fourth lane line, respectively.

6. The method for generating the dynamic target line in the vehicle automatic driving process as claimed in any one of claims 3 to 5, wherein the preset condition for the entrance ramp comprises:
no vehicle in a lateral position of the vehicle in the ramp;
a predicted collision time of the vehicle and the front vehicle being greater than a first preset time and a distance between the vehicle and the front vehicle being greater than a first preset distance; and
a predicted collision time of the vehicle and a rear vehicle being greater than a second preset time and a distance between the vehicle and the rear vehicle being greater than a second preset distance.

7. The method for generating the dynamic target line in the vehicle automatic driving process as claimed in any one of claims 3 to 6, wherein the providing an electronic map of a preset range around the vehicle comprises:
acquiring position information of the vehicle; a position, a speed and a size of a target object in the preset range around the vehicle, and information on a lane position and a lane width within the preset range around the vehicle; and
generating the electronic map according to the position information of the vehicle; the position, the speed and the size of a vehicle within the preset range around the vehicle; and the information on the lane position and the lane width within the preset range around the vehicle.

8. The method for generating the dynamic target line in the vehicle automatic driving process as claimed in any one of claims 3 to 7, further comprising:
generating a third dynamic target line of the current travel lane of the vehicle according to a position and a shape of an obstacle, and the curvature and the width of the current travel lane of the vehicle, in a case that within the first preset range around the vehicle, the obstacle is located at a side of the vehicle, and at least a part of the obstacle is located in the current travel lane of the vehicle.

9. The method for generating the dynamic target line in the vehicle automatic driving process as claimed in any one of claims 3 to 8, wherein after the acquiring obstacle information in all lanes within a first preset range around the vehicle, the method further comprises:
acquiring the current position of the vehicle;
acquiring road environment information in the first preset range around the vehicle according to the current position of the vehicle;
generating a curvature and a width of each lane of the current travel section according to the current position of the vehicle and the road environment information in the first preset range around the vehicle; and
generating a fitting lane line of all lanes according to the curvature and the width of each lane of the current travel section.

10. A system for generating a dynamic target line in a vehicle automatic driving process, comprising:
an information acquisition module (100)
configured to acquire obstacle information in all lanes within a preset range around a vehicle;
a lane line generation module (200)
configured to generate a dynamic lane line; and
a control module (300) configured to control the lane line generation module to generate a first dynamic target line of a current travel lane of the vehicle according to a curvature and a width of the current travel lane of the vehicle, in a case of no obstacle is located in front of the vehicle within the current travel lane within a first preset range around the vehicle;
acquire a safe driving width of the current travel lane of the vehicle according to the obstacle information in front of the current travel lane of the vehicle, in a case that the obstacle is located in front of the vehicle within the current travel lane within the first preset range around the vehicle; and
control the lane line generation module to generate a second dynamic target line of the current travel lane according to the safe driving width of the current travel lane, in a case that the safe driving width of the current travel lane of the vehicle is greater than a preset safe passage width
and after obtaining the safe driving width of the current travel lane,
to determine whether an obstacle is located in an adjacent lane within the first preset range around the vehicle, in a case that the safe driving width of the current travel lane of the vehicle is less than the preset safe passage width; and
generate a first dynamic target line of the adjacent lane, in a case of no obstacle in the adjacent lane within the first preset range around the vehicle,
and in a case that an obstacle is located in the adjacent lane within a second preset range around the vehicle, controlling the vehicle to decelerate, wherein the second preset range is smaller than the first preset range,
**characterized in that**
the control module is further configured to
acquire a safe driving width of the adjacent lane, in a case that no obstacle is located in the adjacent lane within the second preset range around the vehicle and an obstacle is located in front of the vehicle in the adjacent lane within the first preset range around the vehicle;
generate a second dynamic target line of the adjacent lane according to the safe driving width of the adjacent lane, in a case that the safe driving width of the adjacent lane is greater than the preset safe passage width; and
control the vehicle to decelerate, in a case that the safe driving width of the adjacent lane is less than the preset safe passage width.

11. The system for generating the dynamic target line in the vehicle automatic driving process as claimed in claim 10, further comprising:
an electronic map providing module (400)
configured to provide an electronic map of a preset range around the vehicle when the vehicle travels along a first dynamic target line of an adjacent lane or a second dynamic target line of the adjacent lane, wherein the electronic map comprises: lane lines of all lanes at an entrance of a ramp and vehicle information for all vehicles at the entrance of the ramp;
wherein the information acquisition module (100) is further configured to acquire a transverse closest distance between the vehicle and a vehicle in the ramp according to a curvature of a lane line and acquire a closest point of a transverse position between the vehicle and a front vehicle in a current lane in a case that a preset condition for an entrance ramp is not met;
the lane line generation module (200) is further configured to generate a first lane line parallel to the curvature of the lane line according to the transverse closest distance; and generate a safe driving region according to the first lane line, the current position of the vehicle and the closest point of the transverse position between the vehicle and the front vehicle; and generate a safety offset line according to the safe driving region; and
the control module (300)
is further configured to determine whether the vehicle satisfies the preset condition for the entrance ramp.

12. A vehicle, comprising the system for generating the dynamic target line in the vehicle automatic driving process as claimed in claims 10 or 11.

## Patentansprüche

1. Verfahren zur Erzeugung einer dynamischen Ziellinie in einem automatischen Fahrprozess eines Fahrzeugs, das umfasst:
Erfassen (S1) von Hindernisinformationen auf sämtlichen Spuren innerhalb eines ersten vorbestimmten Bereichs um ein Fahrzeug;
Erzeugen (S2) einer ersten dynamischen Ziellinie einer aktuellen Fahrspur des Fahrzeugs entsprechend einer Krümmung und einer Breite der aktuellen Fahrspur des Fahrzeugs, wenn sich kein Hindernis vor dem Fahrzeug innerhalb der aktuellen Fahrspur innerhalb des ersten vorbestimmten Bereichs um das Fahrzeug befindet;
Erfassen (S3) einer sicheren Fahrbreite der aktuellen Fahrspur des Fahrzeugs, wenn sich ein Hindernis vor dem Fahrzeug innerhalb der aktuellen Fahrspur befindet; und
Erzeugen (S4) einer zweiten dynamischen Ziellinie der aktuellen Fahrspur entsprechend der sicheren Fahrbreite, wenn die sichere Fahrbreite der aktuellen Fahrspur des Fahrzeugs größer als eine vorbestimmte sichere Durchgangsbreite ist,
wobei das Verfahren nach dem Erhalten der sicheren Fahrbreite der aktuellen Fahrspur ferner umfasst:
Bestimmen, ob sich ein Hindernis auf einer Nebenspur innerhalb des ersten vorbestimmten Bereichs um das Fahrzeug befindet, wenn die sichere Fahrbreite der aktuellen Fahrspur des Fahrzeugs geringer ist als die vorbestimmte sichere Durchgangsbreite; und
Erzeugen einer ersten dynamischen Ziellinie der Nebenspur, wenn sich kein Hindernis auf der Nebenspur innerhalb des ersten vorbestimmten Bereichs um das Fahrzeug befindet,
wobei das Verfahren nach dem Bestimmen, ob sich ein Hindernis auf der Nebenspur innerhalb des ersten vorbestimmten Bereichs um das Fahrzeug befindet, ferner umfasst:
wenn sich ein Hindernis auf der Nebenspur innerhalb eines zweiten vorbestimmten Bereichs um das Fahrzeug befindet, Steuern des Fahrzeugs, so dass dieses abbremst, wobei der zweite vorbestimmte Bereich kleiner als der erste vorbestimmte Bereich ist,
**gekennzeichnet durch**
das Erfassen einer sicheren Fahrbreite der Nebenspur, wenn sich kein Hindernis auf der Nebenspur innerhalb des zweiten vorbestimmten Bereichs um das Fahrzeug befindet und sich ein Hindernis vor dem Fahrzeug auf der Nebenspur innerhalb des ersten vorbestimmten Bereichs um das Fahrzeug befindet;
Erzeugen einer zweiten dynamischen Ziellinie der Nebenspur entsprechend der sicheren Fahrbreite der Nebenspur, wenn die sichere Fahrbreite der Nebenspur größer als die vorbestimmte sichere Durchgangsbreite ist; und
Steuern des Fahrzeugs, so dass dieses abbremst, wenn die sichere Fahrbreite der Nebenspur geringer als die vorbestimmte sichere Durchgangsbreite ist.

2. Verfahren zur Erzeugung der dynamischen Ziellinie in dem automatischen Fahrprozess eines Fahrzeugs nach Anspruch 1, das ferner umfasst:
wenn das Fahrzeug entlang der ersten dynamischen Ziellinie der Nebenspur oder der zweiten dynamischen Ziellinie der Nebenspur fährt, wenn sich kein Hindernis auf der ursprünglichen Fahrspur innerhalb des ersten vorbestimmten Bereichs um das Fahrzeug befindet und sich kein Hindernis seitlich des Fahrzeugs und hinter dem Fahrzeug innerhalb des zweiten vorbestimmten Bereichs um das Fahrzeug befindet, Erzeugen einer dynamischen Ziellinie, nachdem das Fahrzeug auf die ursprüngliche Fahrspur zurückgekehrt ist.

3. Verfahren zur Erzeugung der dynamischen Ziellinie in dem automatischen Fahrprozess eines Fahrzeugs nach einem der Ansprüche 1 bis 2, das ferner umfasst:
Bereitstellen einer elektronischen Karte eines vorbestimmten Bereichs um das Fahrzeug, wenn das Fahrzeug entlang der ersten dynamischen Ziellinie der Nebenspur und der zweiten dynamischen Ziellinie der Nebenspur fährt, wobei die elektronische Karte Spurlinien sämtlicher Spuren an einer Einfahrt einer Rampe und Fahrzeuginformationen für sämtliche Fahrzeuge an der Einfahrt der Rampe enthält;
Bestimmen, ob das Fahrzeug eine vorbestimmte Bedingung für eine Einfahrtsrampe erfüllt; und
wenn die vorbestimmte Bedingung für die Einfahrtsrampe nicht erfüllt wird, Erfassen eines geringsten Querabstands zwischen dem Fahrzeug und einem Fahrzeug auf der Rampe entsprechend einer Krümmung der Spurlinien;
Erzeugen einer ersten Spurlinie parallel zu der Krümmung der Spurlinie entsprechend dem geringsten Querabstand;
Erfassen eines nächstgelegenen Punkts einer Querposition zwischen dem Fahrzeug und einem vorderen Fahrzeug auf der aktuellen Spur;
Erzeugen eines sicheren Fahrbereichs entsprechend der ersten Spurlinie, einer aktuellen Position des Fahrzeugs, und der nächstgelegenen Position der Querposition zwischen dem Fahrzeug und dem vorderen Fahrzeug; und
Erzeugen einer Sicherheitsversatzlinie entsprechend dem sicheren Fahrbereich.

4. Verfahren zur Erzeugung der dynamischen Ziellinie in dem automatischen Fahrprozess eines Fahrzeugs nach Anspruch 3, wobei das Erzeugen des sicheren Fahrbereichs entsprechend der ersten Fahrspur, der aktuellen Position des Fahrzeugs, und dem zur Querposition nächstgelegenen Punkt zwischen dem Fahrzeug und dem vorderen Fahrzeug umfasst:
Erzeugen einer zweiten Spurlinie durch Verschieben der ersten Spurlinie um einen vorbestimmten Abstand entlang einer Durchgangsrichtung durch den zur Querposition nächstgelegenen Punkt zwischen dem Fahrzeug und dem vorderen Fahrzeug;
Erzeugen einer dritten Spurlinie, die durch den zur Querposition nächstgelegenen Punkt zwischen dem Fahrzeug und dem vorderen Fahrzeug verläuft und senkrecht zur ersten Spurlinie ist;
Erzeugen einer vierten Spurlinie, die durch die aktuelle Position des Fahrzeugs verläuft und senkrecht zur Krümmung der Spurlinie ist; und
Erzeugen des sicheren Fahrbereichs entsprechend der ersten Spurlinie, der zweiten Spurlinie, der dritten Spurlinie, und der vierten Spurlinie.

5. Verfahren zur Erzeugung der dynamischen Ziellinie in dem automatischen Fahrprozess eines Fahrzeugs nach Anspruch 4, wobei das Erzeugen einer Sicherheitsversatzlinie entsprechend dem sicheren Fahrbereich ferner umfasst:
Erzeugen der Sicherheitsversatzlinie entsprechend der ersten Spurlinie, der zweiten Spurlinie, der dritten Spurlinie, und der vierten Spurlinie,
wobei eine Krümmung der Sicherheitsversatzlinie gleich der Krümmung der Spurlinie ist, ein Abstand zwischen der Sicherheitsversatzlinie und der ersten Spurlinie gleich einem Abstand zwischen der Sicherheitsversatzlinie und der zweiten Spurlinie ist, und die Sicherheitsversatzlinie die dritte Spurlinie bzw. die vierte Spurlinie schneidet.

6. Verfahren zur Erzeugung der dynamischen Ziellinie in dem automatischen Fahrprozess eines Fahrzeugs nach einem der Ansprüche 3 bis 5, wobei die vorbestimmte Bedingung für die Einfahrtsrampe umfasst:
kein Fahrzeug in einer lateralen Position des Fahrzeugs auf der Rampe;
eine vorausgesagte Kollisionszeit des Fahrzeugs und des vorderen Fahrzeugs ist größer als eine erste vorbestimmte Zeit, und ein Abstand zwischen dem Fahrzeug und dem vorderen Fahrzeug ist größer als ein erster vorbestimmter Abstand; und
eine vorausgesagte Kollisionszeit des Fahrzeugs und eines hinteren Fahrzeugs ist größer als eine zweite vorbestimmte Zeit, und ein Abstand zwischen dem Fahrzeug und dem hinteren Fahrzeug ist größer als ein zweiter vorbestimmter Abstand.

7. Verfahren zur Erzeugung der dynamischen Ziellinie in dem automatischen Fahrprozess eines Fahrzeugs nach einem der Ansprüche 3 bis 6, wobei das Bereitstellen einer elektronischen Karte eines vorbestimmtes Bereichs um das Fahrzeug umfasst:
Erfassen von Positionsinformationen des Fahrzeugs; einer Position, einer Geschwindigkeit und einer Größe eines Zielobjekts in dem vorbestimmten Bereich um das Fahrzeug; und Informationen zu einer Spurposition und einer Spurbreite innerhalb des vorbestimmten Bereichs um das Fahrzeug; und
Erzeugen der elektronischen Karte entsprechend den Positionsinformationen des Fahrzeugs; der Position, der Geschwindigkeit und der Größe eines Fahrzeugs innerhalb des vorbestimmten Bereichs um das Fahrzeug; und den Informationen zu der Spurposition und der Spurbreite innerhalb des vorbestimmten Bereichs um das Fahrzeug.

8. Verfahren zur Erzeugung der dynamischen Ziellinie in dem automatischen Fahrprozess eines Fahrzeugs nach einem der Ansprüche 3 bis 7, das ferner umfasst:
Erzeugen einer dritten dynamischen Ziellinie der aktuellen Fahrspur des Fahrzeugs entsprechend einer Position und einer Form eines Hindernisses, und der Krümmung der Breite der aktuellen Fahrspur des Fahrzeugs, wenn sich das Hindernis innerhalb des ersten vorbestimmten Bereichs um das Fahrzeug auf einer Seite des Fahrzeugs befindet, und sich zumindest ein Teil des Hindernisses auf der aktuellen Fahrspur des Fahrzeugs befindet.

9. Verfahren zur Erzeugung der dynamischen Ziellinie in dem automatischen Fahrprozess eines Fahrzeugs nach einem der Ansprüche 3 bis 8, wobei das Verfahren nach dem Erfassen der Hindernisinformationen auf sämtlichen Spuren innerhalb eines ersten vorbestimmten Bereichs um das Fahrzeug umfasst:
Erfassen der aktuellen Position des Fahrzeugs;
Erfassen von Straßenumfeldinformationen in dem ersten vorbestimmten Bereich um das Fahrzeug entsprechend der aktuellen Position des Fahrzeugs;
Erzeugen einer Krümmung und einer Breite jeder Spur des aktuellen Fahrabschnitts entsprechend der aktuellen Position des Fahrzeugs und den Stra-ßenumfeldinformationen in dem ersten vorbestimmten Bereich um das Fahrzeug; und
Erzeugen einer passenden Spurlinie sämtlicher Spuren entsprechend der Krümmung und der Breite jeder Spur des aktuellen Fahrabschnitts.

10. System zur Erzeugung einer dynamischen Ziellinie in einem automatischen Fahrprozess eines Fahrzeugs, das aufweist:
ein Informationserfassungsmodul (100), das dazu ausgebildet ist, Hindernisinformationen auf sämtlichen Spuren innerhalb eines vorbestimmten Bereichs um ein Fahrzeug zu erfassen;
ein Spurlinienerzeugungsmodul (200), das dazu ausgebildet ist, eine dynamische Spurlinie zu erzeugen; und
ein Steuermodul (300), das für Folgendes ausgebildet ist:
Steuern des Spurlinienerzeugungsmoduls zur Erzeugung einer ersten dynamischen Spurlinie einer aktuellen Fahrspur des Fahrzeugs entsprechend einer Krümmung und einer Breite der aktuellen Fahrspur des Fahrzeugs, wenn sich kein Hindernis vor dem Fahrzeugs innerhalb der aktuellen Fahrspur innerhalb eines ersten vorbestimmten Bereichs um das Fahrzeug befindet;
Erfassen einer sicheren Fahrbreite der aktuellen Fahrspur des Fahrzeugs entsprechend den Hindernisinformationen vor der aktuellen Fahrspur des Fahrzeugs, wenn sich das Hindernis vor dem Fahrzeug innerhalb der aktuellen Fahrspur innerhalb des ersten vorbestimmten Bereichs um das Fahrzeug befindet; und
Steuern des Spurlinienerzeugungsmoduls zur Erzeugung einer zweiten dynamischen Ziellinie der aktuellen Fahrspur entsprechend der sicheren Fahrbreite der aktuellen Fahrspur, wenn die sichere Fahrbreite der aktuellen Fahrspur des Fahrzeugs größer als eine vorbestimmte sichere Durchgangsbreite ist, und nach dem Erhalten der sicheren Fahrbreite der aktuellen Fahrspur zur Bestimmung, ob sich ein Hindernis auf einer Nebenspur innerhalb des ersten vorbestimmten Bereichs um das Fahrzeug befindet, wenn die sichere Fahrbreite der aktuellen Fahrspur des Fahrzeugs geringer als die vorbestimmte sichere Durchgangsbreite ist; und
Erzeugen einer ersten dynamischen Ziellinie der Nebenspur, wenn sich kein Hindernis auf der Nebenspur innerhalb des ersten vorbestimmten Bereichs um das Fahrzeug befindet,
und wenn sich ein Hindernis auf der Nebenspur innerhalb eines zweiten vorbestimmten Bereichs um das Fahrzeug befindet, Steuern des Fahrzeugs, so dass es abbremst, wobei der zweite vorbestimmte Bereich kleiner als der erste vorbestimmte Bereich ist,
**dadurch gekennzeichnet, dass**
das Steuermodul ferner für Folgendes ausgebildet ist:
Erfassen einer sicheren Fahrbreite der Nebenspur, wenn sich kein Hindernis auf der Nebenspur innerhalb des zweiten vorbestimmten Bereichs um das Fahrzeug befindet, und wenn sich ein Hindernis vor dem Fahrzeug auf der Nebenspur innerhalb des ersten vorbestimmten Bereichs um das Fahrzeug befindet;
Erzeugen einer zweiten dynamischen Ziellinie der Nebenspur entsprechend der sicheren Fahrbreite der Nebenspur, wenn die sichere Fahrbreite der Nebenspur größer als die vorbestimmte sichere Durchgangsbreite ist; und
Steuern des Fahrzeugs, so dass es abbremst, wenn die sichere Fahrbreite der Nebenspur geringer als die vorbestimmte sichere Durchgangsbreite ist.

11. System zur Erzeugung der dynamischen Ziellinie in dem automatischen Fahrprozess eines Fahrzeugs nach Anspruch 10, das aufweist:
ein Modul (400) zur Bereitstellung einer elektronischen Karte, das dazu ausgebildet ist, eine elektronische Karte eines vorbestimmten Bereichs um das Fahrzeugs bereitzustellen, wenn sich das Fahrzeug entlang einer ersten dynamischen Ziellinie einer Nachbarspur und einer zweiten dynamischen Ziellinie der Nachbarspur bewegt, wobei die elektronische Karte aufweist: Spurlinien sämtlicher Spuren an einer Einfahrt einer Rampe und Fahrzeuginformationen für sämtliche Fahrzeuge an der Einfahrt der Rampe;
wobei das Informationserfassungsmodul (100) ferner dazu ausgebildet ist, einen geringsten Querabstand zwischen dem Fahrzeug und einem Fahrzeug auf der Rampe entsprechend einer Krümmung einer Spurlinie zu erfassen und einen nächstgelegenen Punkt einer Querposition zwischen dem Fahrzeug und einem vorderen Fahrzeug auf einer aktuellen Spur zu erfassen, wenn eine vorbestimmte Bedingung für eine Einfahrtsrampe nicht erfüllt wird;
wobei das Spurlinienerzeugungsmodul (200) ferner dazu ausgebildet ist, eine erste Spurlinie parallel zu der Krümmung der Spurlinie entsprechend dem geringsten Querabstand zu erzeugen, und einen sicheren Fahrbereich entsprechen der ersten Spurlinie, der aktuellen Position des Fahrzeugs, und dem nächstgelegenen Punkt der Querposition zwischen dem Fahrzeug und dem vorderen Fahrzeug zu erzeugen, und eine Sicherheitsversatzlinie entsprechend dem sicheren Fahrbereich zu erzeugen; und
wobei das Steuermodul (300) ferner dazu ausgebildet ist, zu bestimmen, ob das Fahrzeug die vorbestimmte Bedingung für die Eintrittsrampe erfüllt.

12. Fahrzeug, welches das System zur Erzeugung der dynamischen Ziellinie in dem automatischen Fahrprozess eines Fahrzeugs nach Anspruch 10 oder 11 umfasst.

## Revendications

1. Procédé de génération d'une ligne cible dynamique dans un processus de conduite automatique de véhicule, comprenant :
l'acquisition (S1)
d'informations d'obstacle dans toutes les voies à l'intérieur d'une première plage prédéfinie autour d'un véhicule :
la génération (S2)
d'une première ligne cible dynamique d'une voie de circulation actuelle du véhicule selon une courbure et une largeur de la voie de circulation actuelle du véhicule, dans un cas où aucun obstacle n'est situé devant le véhicule à l'intérieur de la voie de circulation actuelle à l'intérieur de la première plage prédéfinie autour du véhicule ;
l'acquisition (S3)
d'une largeur de conduite sûre de la voie de circulation actuelle du véhicule, dans un cas où un obstacle est situé devant le véhicule à l'intérieur de la voie de circulation actuelle ; et
la génération (S4)
d'une seconde ligne cible dynamique de la voie de circulation actuelle selon la largeur de conduite sûre, dans un cas où la largeur de conduite sûre de la voie de circulation actuelle du véhicule est supérieure à une largeur de passage sûre prédéfinie
dans lequel, après l'obtention de la largeur de conduite sûre de la voie de circulation actuelle, le procédé comprend en outre :
le fait de déterminer si un obstacle est situé dans une voie adjacente à l'intérieur de la première plage prédéfinie autour du véhicule, dans un cas où la largeur de conduite sûre de la voie de circulation actuelle du véhicule est inférieure à la largeur de passage sûre prédéfinie ; et
la génération d'une première ligne cible dynamique de la voie adjacente, dans un cas où il n'y a pas d'obstacle dans la voie adjacente à l'intérieur de la première plage prédéfinie autour du véhicule,
dans lequel, après avoir déterminé si un obstacle est situé dans la voie adjacente à l'intérieur de la première plage prédéfinie autour du véhicule, le procédé comprend en outre :
dans un cas où un obstacle est situé dans la voie adjacente à l'intérieur d'une seconde plage prédéfinie autour du véhicule, la commande du véhicule pour décélérer, dans lequel la seconde plage prédéfinie est plus petite que la première plage prédéfinie,
**caractérisé en ce que**
l'acquisition d'une largeur de conduite sûre de la voie adjacente, dans un cas où aucun obstacle n'est situé dans la voie adjacente à l'intérieur de la seconde plage prédéfinie autour du véhicule et un obstacle est situé devant le véhicule dans la voie adjacente à l'intérieur de la première plage prédéfinie autour du véhicule ;
la génération d'une seconde ligne cible dynamique de la voie adjacente selon la largeur de conduite sûre de la voie adjacente, dans un cas où la largeur de conduite sûre de la voie adjacente est supérieure à la largeur de passage sûre prédéfinie ; et
la commande du véhicule pour décélérer, dans un cas où la largeur de conduite sûre de la voie adjacente est inférieure à la largeur de passage sûre prédéfinie.

2. Procédé de génération de la ligne cible dynamique dans le processus de conduite automatique de véhicule selon la revendication 1, comprenant en outre :
lorsque le véhicule circule le long de la première ligne cible dynamique de la voie adjacente ou de la seconde ligne cible dynamique de la voie adjacente, dans un cas où aucun obstacle n'est situé au niveau de la voie de circulation initiale à l'intérieur de la première plage prédéfinie autour du véhicule et aucun obstacle n'est situé au niveau d'un côté et d'un arrière du véhicule à l'intérieur de la seconde plage prédéfinie autour du véhicule, la génération d'une ligne cible dynamique après que le véhicule retourne à la voie de circulation initiale.

3. Procédé de génération de la ligne cible dynamique dans le processus de conduite automatique de véhicule selon l'une quelconque des revendications 1 à 2, comprenant en outre :
la fourniture d'une carte électronique d'une plage prédéfinie autour du véhicule lorsque le véhicule circule le long de la première ligne cible dynamique de la voie adjacente ou de la seconde ligne cible dynamique de la voie adjacente, dans lequel la carte électronique comprend des lignes de voie de toutes les voies au niveau d'une entrée d'une rampe et des informations de véhicule pour tous les véhicules au niveau de l'entrée de la rampe ;
le fait de déterminer si le véhicule satisfait à une condition prédéfinie pour une rampe d'entrée ; et
dans un cas où la condition prédéfinie pour la rampe d'entrée n'est pas remplie, l'acquisition d'une distance la plus proche transversale entre le véhicule et un véhicule dans la rampe selon une courbure des lignes de voie ;
la génération d'une première ligne de voie parallèle à la courbure de la ligne de voie selon la distance la plus proche transversale ;
l'acquisition d'un point le plus proche d'une position transversale entre le véhicule et un véhicule avant dans une voie actuelle ;
la génération d'une région de conduite sûre selon la première ligne de voie, une position actuelle du véhicule, et le point le plus proche de la position transversale entre le véhicule et le véhicule avant ; et
la génération d'une ligne de décalage de sécurité selon la région de conduite sûre.

4. Procédé de génération de la ligne cible dynamique dans le processus de conduite automatique de véhicule selon la revendication 3, dans lequel la génération d'une région de conduite sûre selon la première ligne de voie, la position actuelle du véhicule et le point le plus proche de la position transversale entre le véhicule et le véhicule avant comprend :
la génération d'une deuxième ligne de voie en translatant la première ligne de voie pour une distance prédéfinie le long d'une direction de passage à travers le point le plus proche de la position transversale entre le véhicule et le véhicule avant ;
la génération d'une troisième ligne de voie qui passe à travers le point le plus proche de la position transversale entre le véhicule et le véhicule avant et est perpendiculaire à la première ligne de voie ;
la génération d'une quatrième ligne de voie qui passe à travers la position actuelle du véhicule et qui est perpendiculaire à la courbure de la ligne de voie ; et
la génération de la région de conduite sûre selon la première ligne de voie, la deuxième ligne de voie, la troisième ligne de voie et la quatrième ligne de voie.

5. Procédé de génération de la ligne cible dynamique dans le processus de conduite automatique de véhicule selon la revendication 4, dans lequel la génération d'une ligne de décalage de sécurité selon la région de conduite sûre comprend en outre :
la génération de la ligne de décalage de sécurité selon la première ligne de voie, la deuxième ligne de voie, la troisième ligne de voie et la quatrième ligne de voie,
dans lequel une courbure de la ligne de décalage de sécurité est égale à la courbure de la ligne de voie, une distance entre la ligne de décalage de sécurité et la première ligne de voie est égale à une distance entre la ligne de décalage de sécurité et la deuxième ligne de voie, et la ligne de décalage de sécurité coupe la troisième ligne de voie et la quatrième ligne de voie, respectivement.

6. Procédé de génération de la ligne cible dynamique dans le processus de conduite automatique de véhicule selon l'une quelconque des revendications 3 à 5, dans lequel la condition prédéfinie pour la rampe d'entrée comprend :
aucun véhicule dans une position latérale du véhicule dans la rampe ;
un temps de collision prédit du véhicule et du véhicule avant étant supérieur à un premier temps prédéfini et une distance entre le véhicule et le véhicule avant étant supérieure à une première distance prédéfinie ; et
un temps de collision prédit du véhicule et d'un véhicule arrière étant supérieur à un second temps prédéfini et une distance entre le véhicule et le véhicule arrière étant supérieure à une seconde distance prédéfinie.

7. Procédé de génération de la ligne cible dynamique dans le processus de conduite automatique de véhicule selon l'une quelconque des revendications 3 à 6, dans lequel la fourniture d'une carte électronique d'une plage prédéfinie autour du véhicule comprend :
l'acquisition d'informations de position du véhicule ; une position, une vitesse et une taille d'un objet cible dans la plage prédéfinie autour du véhicule, et des informations sur une position de voie et une largeur de voie à l'intérieur de la plage prédéfinie autour du véhicule ; et
la génération de la carte électronique en fonction des informations de position du véhicule ; la position, la vitesse et la taille d'un véhicule à l'intérieur de la plage prédéfinie autour du véhicule ; et les informations sur la position de voie et la largeur de voie à l'intérieur de la plage prédéfinie autour du véhicule.

8. Procédé de génération de la ligne cible dynamique dans le processus de conduite automatique de véhicule selon l'une quelconque des revendications 3 à 7, comprenant en outre :
la génération d'une troisième ligne cible dynamique de la voie de circulation actuelle du véhicule selon une position et une forme d'un obstacle, et la courbure et la largeur de la voie de circulation actuelle du véhicule, dans un cas où, à l'intérieur de la première plage prédéfinie autour du véhicule, l'obstacle est situé au niveau d'un côté du véhicule, et au moins une partie de l'obstacle est située dans la voie de circulation actuelle du véhicule.

9. Procédé de génération de la ligne cible dynamique dans le processus de conduite automatique de véhicule selon l'une quelconque des revendications 3 à 8, dans lequel après l'acquisition d'informations d'obstacle dans toutes les voies à l'intérieur d'une première plage prédéfinie autour du véhicule, le procédé comprend en outre :
l'acquisition de la position actuelle du véhicule ;
l'acquisition d'informations d'environnement routier dans la première plage prédéfinie autour du véhicule en fonction de la position actuelle du véhicule ;
la génération d'une courbure et d'une largeur de chaque voie de la section de circulation actuelle en fonction de la position actuelle du véhicule et des informations d'environnement routier dans la première plage prédéfinie autour du véhicule ; et
la génération d'une ligne de voie d'ajustement de toutes les voies selon la courbure et la largeur de chaque voie de la section de circulation actuelle.

10. Système de génération d'une ligne cible dynamique dans un processus de conduite automatique de véhicule, comprenant :
un module d'acquisition d'informations (100) configuré pour acquérir des informations d'obstacle dans toutes les voies à l'intérieur d'une plage prédéfinie autour d'un véhicule ;
un module de génération de ligne de voie (200) configuré pour générer une ligne de voie dynamique ; et un module de commande (300) configuré pour :
commander le module de génération de ligne de voie pour générer une première ligne cible dynamique d'une voie de circulation actuelle du véhicule selon une courbure et une largeur de la voie de circulation actuelle du véhicule, dans un cas où aucun obstacle n'est situé devant le véhicule à l'intérieur de la voie de circulation actuelle à l'intérieur d'une première plage prédéfinie autour du véhicule ;
acquérir une largeur de conduite sûre de la voie de circulation actuelle du véhicule en fonction des informations d'obstacle devant la voie de circulation actuelle du véhicule, dans le cas où l'obstacle est situé devant le véhicule dans la voie de circulation actuelle à l'intérieur de la première plage prédéfinie autour du véhicule ; et
commander le module de génération de ligne de voie pour générer une seconde ligne cible dynamique de la voie de circulation actuelle en fonction de la largeur de conduite sûre de la voie de circulation actuelle, dans un cas où la largeur de conduite sûre de la voie de circulation actuelle du véhicule est supérieure à une largeur de passage sûre prédéfinie
et après l'obtention de la largeur de conduite sûre de la voie de circulation actuelle,
pour déterminer si un obstacle est situé dans une voie adjacente à l'intérieur de la première plage prédéfinie autour du véhicule, dans un cas où la largeur de conduite sûre de la voie de circulation actuelle du véhicule est inférieure à la largeur de passage sûre prédéfinie ; et
générer une première ligne cible dynamique de la voie adjacente, dans un cas où il n'y a pas d'obstacle dans la voie adjacente à l'intérieur de la première plage prédéfinie autour du véhicule,
et dans un cas où un obstacle est situé dans la voie adjacente à l'intérieur d'une seconde plage prédéfinie autour du véhicule, commander le véhicule pour décélérer, dans lequel la seconde plage prédéfinie est plus petite que la première plage prédéfinie,
**caractérisé en ce que**
le module de commande est en outre configuré pour
acquérir une largeur de conduite sûre de la voie adjacente, dans un cas où aucun obstacle n'est situé dans la voie adjacente à l'intérieur de la seconde plage prédéfinie autour du véhicule et qu'un obstacle est situé devant le véhicule dans la voie adjacente à l'intérieur de la première plage prédéfinie autour du véhicule ;
générer une seconde ligne cible dynamique de la voie adjacente selon la largeur de conduite sûre de la voie adjacente, dans un cas où la largeur de conduite sûre de la voie adjacente est supérieure à la largeur de passage sûre prédéfinie ; et
commander le véhicule pour décélérer, dans un cas où la largeur de conduite sûre de la voie adjacente est inférieure à la largeur de passage sûre prédéfinie.

11. Système de génération de la ligne cible dynamique dans le processus de conduite automatique de véhicule selon la revendication 10, comprenant en outre :
un module de fourniture de carte électronique (400) configuré pour fournir une carte électronique d'une plage prédéfinie autour du véhicule lorsque le véhicule circule le long d'une première ligne cible dynamique d'une voie adjacente ou d'une seconde ligne cible dynamique de la voie adjacente, dans lequel la carte électronique comprend : des lignes de voie de toutes les voies au niveau d'une entrée d'une rampe et des informations de véhicule pour tous les véhicules au niveau de l'entrée de la rampe ;
dans lequel le module d'acquisition d'informations (100) est en outre configuré pour acquérir une distance la plus proche transversale entre le véhicule et un véhicule dans la rampe selon une courbure d'une ligne de voie et acquérir un point le plus proche d'une position transversale entre le véhicule et un véhicule avant dans une voie actuelle dans un cas où une condition prédéfinie pour une rampe d'entrée n'est pas remplie ;
le module de génération de ligne de voie (200) est en outre configuré pour générer une première ligne de voie parallèle à la courbure de la ligne de voie selon la distance la plus proche transversale ; et générer une région de conduite sûre selon la première ligne de voie, la position actuelle du véhicule et le point le plus proche de la position transversale entre le véhicule et le véhicule avant ; et générer une ligne de décalage de sécurité selon la région de conduite sûre ; et
le module de commande (300) est en outre configuré pour déterminer si le véhicule satisfait à la condition prédéfinie pour la rampe d'entrée.

12. Véhicule, comprenant le système de génération de la ligne cible dynamique dans le processus de conduite automatique de véhicule selon les revendications 10 ou 11.
